# EUROPÄISCHE PATENTANMELDUNG

(11) **EP 1 284 544 A1**
(43) Veröffentlichungstag der Anmeldung: **19.02.2003**
(21) Anmeldenummer: 01119922.1
(22) Anmeldetag: 17.08.2001
(51) Int. Cl.: H04B 7/005, H04L 1/18

(54) **Verfahren und Vorrichtung zum Senden von Daten in einem Kommunikationssystem mit extrem niedriger Sendeleistung**

(71) Anmelder: SIEMENS AKTIENGESELLSCHAFT, 80333 München (DE)
(72) Erfinder: Zirwas, Wolfgang, 82194 Groebenzell (DE)

(57) **Zusammenfassung**

Die Erfindung bezieht sich auf ein Verfahren zum Regeln der Sendeleistung einer insbesondere mobilen teilnehmerseitigen Kommunikationsstation (MT), wobei die Sendeleistung minimal gehalten werden soll.
Um dieses Ziel zu erreichen, wird vorgeschlagen, von einer Station, welche die gesendeten Daten (c1) als Empfangsdaten (c1*) empfängt, die Leistungswerte (Ic1*) davon zu bestimmen und an die ursprünglich sendende Station über eine sichere, von Störeinflüssen nur vernachlässigbar oder nicht gestörte Verbindung (DL) senden zu lassen. In der ursprünglich sendenden Station (MT) kann die Differenz zwischen Sendeleistung (Ic1) und Empfangsleistung (Ic1*) bestimmt und für nachfolgende Sendungen berücksichtigt werden.

## Beschreibung

Die Erfindung bezieht sich auf ein Verfahren zum Regeln der Sendeleistung in einem Kommunikationssystem mit den oberbegrifflichen Merkmalen des Patentanspruchs 1 bzw. Vorrichtungen zum Durchführen eines solchen Verfahrens mit den oberbegrifflichen Merkmalen der Patentansprüche 12 bis 14.

Bei Kommunikationssystemen, insbesondere gemäß dem Standard GSM (Global System for Mobile communications) oder dem UMTS (Universal Mobile Telecommunications System) werden Daten bzw. Informationen zwischen einer teilnehmerseitigen Station und einer netzseitigen Basisstation über Funkschnittstellen übertragen. Beim Einregeln der erforderlichen Sendeleistung ist dabei jeweils die sogenannten Shannon-Kapazität zu berücksichtigen. Mit der Shannon-Kapazität wird angegeben, wie viel Daten bzw. Informationen maximal über einen Kanal gesendet werden können, wenn auf den Kanal übliche Störeinflüsse, u.a. Rauschen (Noise) einwirken. Die Shannon-Kapazität gibt somit ein Verhältnis von Sendeleistung zu Rauschleistung an, das nicht unterschritten werden darf, wenn die Empfangsqualität ausreichend sein soll.

Mit Blick darauf, dass die teilnehmerseitigen Stationen zumeist mobile Stationen mit einer tragbaren Energiequelle sind, ist die Forschung seit langer Zeit darauf gerichtet, das erforderliche Signal/Noise-Verhältnis für Datenübertragungen bei drahtlosen Funk-Kommunikationssystemen zu minimieren. Neben den vorstehend genannten Funk-Kommunikationssystemen betrifft dies beispielsweise auch Datennetze, z. B. gemäß dem Standard HiperLAN2. Um mit möglichst niedriger Sendeleistung senden zu können, wurden verschiedene Verfahren zur Fehlerkorrektur entwickelt, beispielsweise die sogenannten vorwärtsgerichteten Fehlerkorrekturverfahren (FEC: Forward Error Correction) unter den Bezeichnungen Block-FEC, Convolutional-FEC, Turbo-FEC oder Codierungs-FEC. Weitere Fehlerkorrekturverfahren sind sogenannte ARQ-Schemata (ARQ: Automatic Repeat Request), bei denen redundante Daten übertragen werden, adaptive Modulationsverfahren und so weiter.

Bei den derartigen Fehlerverfahren gibt es insbesondere Fehlerkorrekturverfahren, bei denen ein Rückwärtskanal von dem Empfänger zu dem ursprünglichen Sender verwendet wird, beispielsweise um eine Neuübertragung gestörter Datensymbole oder im Fall inkrementaler Redundanz nach mehr zu übersendender Redundanz nachfragen zu können, wie z.B. bei ARQ-Verfahren.

Die Aufgabe der Erfindung besteht darin, ein alternatives Verfahren zur Reduzierung der erforderlichen Sendeleistung insbesondere einer mobilen Station sowie entsprechende Vorrichtungen zum Durchführen eines solchen Verfahrens vorzuschlagen.

Diese Aufgabe wird durch ein Verfahren zum Regeln der Sendeparameter zur Aussendung von Daten mit den Merkmalen des Patentanspruchs 1 bzw. Vorrichtungen zum Durchführen eines solchen Verfahrens mit den Merkmalen der Patentansprüche 12 bis 14 gelöst.

Durch das Zurücksenden analoger Leistungswerte von empfangenen Daten zu einer diese Daten ursprünglich sendenden Station kann die ursprünglich sendende Station direkt überprüfen, ob die ausgesandten Daten ausreichend korrekt empfangen wurden. Falls nicht, kann für nachfolgende Sendevorgänge eine entsprechende Sendeleistungskorrektur vorgenommen werden. Die Überprüfung, ob eine ausreichende Empfangsqualität vorliegt, wird somit nicht empfängerseitig sondern senderseitig vorgenommen.

Vorteilhafte Ausgestaltungen sind Gegenstand abhängiger Ansprüche.

Ein solches Verfahren ermöglicht insbesondere auch die Sendeleistung der sendenden Station, in der Regel einer mobilen Teilnehmerstation, unterhalb der Shannon-Kapazität anzusezten. Da die Sendeleistung lediglich in der Vorwärtsrichtung von der sendenden Station zu der empfangenden Station unterhalb der Shannon-Kapazität vorgenommen wird, in Rückwärtsrichtung jedoch mit einer höheren Shannon-Kapazität und/oder entsprechenden Modulierungsverfahren zur Erzeugung von Redundanz gearbeitet wird, ist dieses auf den ersten Blick scheinbar dem Shannon-Theorem widersprechende Verfahren trotzdem durchführbar. Die Gesamtsendeleistung von Vorwärts- und Rückwärtsrichtung liegt nämlich vorteilhafterweise deutlich oberhalb der Grenze, die durch die Shannon-Kapazität vorgegeben wird.

Das Zurücksenden der Leistungswerte kann dabei derart durchgeführt werden, dass weitere Störeinflüsse bei der Übertragung der analogen Leistungswerte vernachlässigbar sind, so dass in der ursprünglich sendenden Station die zurückgesendeten analogen Leistungswerte korrekt empfangen werden. Um dies zu ermöglichen wird vorzugsweise die Zurücksendung von der ursprünglich empfangenden Station mit einer wesentlich höheren Sendeleistung durchgeführt, als der Sendeleistung, mit der die ursprünglich gesendeten Daten von der ursprünglich sendenden Station ausgesendet wurden. Zweckmäßig ist auch die Verwendung von Kodierungs- und/oder Redundanzverfahren zum Sicherstellen einer fehlerfreien Zurücksendung der analogen Leistungswerte in Rückwärtsrichtung. Diese Vorgehensweise ermöglicht eine einerseits sehr niedrige Sendeenergie bei der teilnehmerseitigen Station zu verwenden, für die der Energieverbrauch möglichst zu reduzieren ist, und andererseits die Rücksendung unabhängig von dem erforderlichen Energieaufwand beim Zurücksenden der analogen Leistungswerte vorzunehmen.

Für den Fall einer durch die ursprünglich sendende Station festgestellten und nicht tolerierbaren Störung bei der ursprünglichen Aussendung von Daten über die Schnittstelle in Vorwärtsrichtung kann diese ursprünglich sendende Station Korrekturdaten zu den zuvor gesendeten Daten zur mit ihr kommunizierenden empfangenden Station aussenden. Derartige Korrekturdaten können aus einem Korrekturfaktor oder einem additiven Korrekturwert bestehen. Möglich ist es jedoch auch, als Korrekturdaten einfach die ursprünglichen Daten erneut zu übersenden, beispielsweise mit einer höheren Sendeenergie.

Besonders zweckmäßig erscheint jedoch das wiederholte Senden der ursprünglichen Daten als Korrekturdaten, wobei die Korrekturdaten dann aus den ursprünglichen Daten bestehen, denen vorteilhafterweise ein entsprechender Differenzbetrag zwischen dem ursprünglich gesendeten analogen Leistungswert und dem empfängerseitig empfangenen analogen Leistungswert hinzugefügt bzw. abgezogen wird, so dass empfängerseitig eine Addition der empfangenen Daten gleichen Datenursprungs vorgenommen werden kann. Das Addieren eines ursprünglichen Datenwertes und eines solchen Korrekturdatenwertes sowie die Division durch zwei würde empfängerseitig zu einem korrigierten Datenwert führen, der für den Fall, dass die Übertragung der Korrekturdaten fehlerfrei erfolgt ist, den ursprünglich gesendeten Datenwert erzeugt.

Besonders zweckmäßig ist dabei jedoch nicht nur die zweimalige Übertragung des Datenwertes als Datenwert und als Korrekturdatenwert, sondern die mehrmalige Übertragung dieses Datenwertes mit jeweils angewendeter Korrektur. Dabei kann jeweils nach dem Empfang des erstmals übersendeten Datenwertes sowie der später empfangenen Korrekturdatenwerten eine Übertragung der empfangenen analogen Leistungswerte in Rückwärtsrichtung zu der sendenden Station vorgenommen werden, so dass diese jeweils auf die nachfolgend zu übersendenden Korrekturdaten der mehrfachen Übertragungsfolge einen erneuten entsprechenden Korrekturwert aufaddieren bzw. davon subtrahieren kann. Je mehr derartig übertragene Daten- bzw. Korrekturdatenwerte empfängerseitig gestapelt werden, desto geringer wird letztendlich der Einfluss durch das Rauschen auf der Funkschnittstelle.

Insbesondere mit Blick auf den letzten zu versendenden Korrekturdatenwert, für den keine Zurückübertragung von dessen empfängerseitig empfangenen analogen Leistungswert erfolgt, ist auch eine statistische Auswertung durchführbar, um einen nicht zufallsbedingten Störwert feststellen zu können oder einen nicht zufallsbedingten additiven oder multiplikativen Störwert feststellen zu können. Damit können dann die nachfolgend zu übertragenden Korrekturdaten, insbesondere der zuletzt zu übertragende Korrekturdatenwert zusätzlich zu dem Ergebnis der letzten Zurückübertragung korrigiert werden.

Zum Durchführen eines solchen Verfahrens sind sinnvollerweise senderseitig Funktionen zur Leistungsbestimmung bzw. Bestimmung der Differenz eines ursprünglich gesendeten analogen Leistungswertes und eines empfängerseitig empfangenen analogen Leistungswertes, dessen Betrag zurückübertragen wurde, und entsprechende Korrekturfunktionen zu implementieren. Dies kann durch das entsprechende Bereitstellen von geeigneten Bausteinen oder durch das Bereitstellen entsprechender, im stationsseitigen Prozessor ausführbarer Routinen durchgeführt werden. Insbesondere ist das Bereitstellen eines Speicherbereichs im Speicher der entsprechenden Station zweckmäßig, in dem die ursprünglich gesendeten Daten mit ihren analogen Leistungswerten hinterlegt sind.

Empfängerseitig ist ebenfalls eine entsprechende Bereitstellung einer Leistungsbestimmungseinrichtung zum Bestimmen des analogen Leistungswertes eines empfangenen Datenwertes und eine Weiterleitungseinrichtung zu implementieren, die den bestimmten analogen Leistungswert zu der ursprünglich sendenden Station zurücksendet. Dabei ist die Zurücksendung derart vorzunehmen, dass weitere Störeinflüsse auf der Schnittstellen vernachlässigbar sind.

Als sendende Station mit niedriger Sendeleistung ist insbesondere eine Kamera zum optischen Aufnehmen von Bildern und/oder Bildfolgen und optional Tonsignalen mit einer derartigen Kommunikationssystemvorrichtung zum elektronischen Ausgeben zuvor aufgenommener Bilder an eine entfernte Kommunikationssystemeinrichtung über eine Funkschnittstelle vorteilhaft. Auf diese Art und Weise können Bilder mit hoher Auflösung, also Bilder mit einem sehr hohen Speicherbedarf aufgenommen und abgespeichert werden, ohne den bei derartigen Kameras in der Regel nur sehr begrenzt verfügbaren Speicherraum mit bereits wenigen einzelnen Bildern oder bei entsprechend hoher Auflösung mit nicht einmal einem einzigen Bild zu überfüllen.

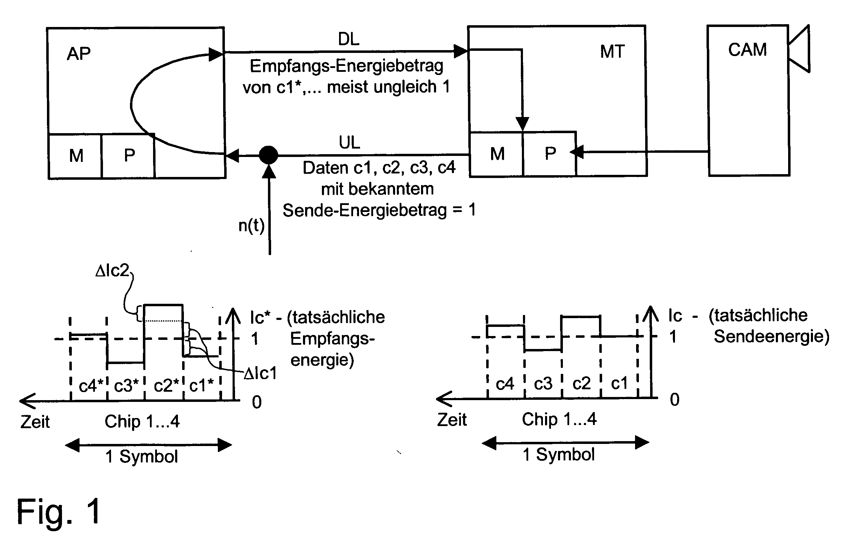

Ein Ausführungsbeispiel wird nachfolgend anhand der Zeichnung näher erläutert. Es zeigt
- Fig. 1: eine Anordnung mit einer Kommunikations-schnittstelle und einer darüber Daten sendenden Station sowie einer diese Daten empfangenden Station mit unterhalb der Stationen abgebildeten Leistungswerten von aufeinanderfolgend gesendeten Datenwerten.

Währen bei typischen Kommunikationssystemen, insbesondere Funk-Kommunikationssystemen netzseitig eine Vielzahl von verschiedenartigsten Einrichtungen bereitgestellt wird, um über einzelne Basisstationen bzw. Zugriffspunkte AP mit einer oder mehreren teilnehmerseitigen Stationen MT zu kommunizieren, ist das nachfolgend beschriebenen Verfahren bereits schon bei der Kommunikation zwischen zwei einzelnen Stationen AP, MT anwendbar, wie dies in Figur 1 dargestellt ist.

Beim vorliegenden Ausführungsbeispiel liegen in einer ersten, z.B. teilnehmerseitigen Station MT, die nachfolgend als sendende Station MT bezeichnet wird, Daten c1...c4 vor, die über eine Funkschnittstelle V zu einer mit der sendenden Station MT kommunizierenden Station AP zu senden sind. Diese Daten c1...c4 empfangende Station AP wird nachfolgend zur besseren Unterscheidung als empfangende bzw. zurücksendende Station AP (AP: Access Point) bezeichnet. Auf der Schnittstelle V, die vorzugsweise als Funk-Schnittstelle ausgebildet ist, werden Übertragungen in Vorwärtsrichtung UL (Uplink) von der sendenden Station MT zu der empfangenden Station AP übertragen, beispielsweise über einen Aufwärtsverbindungskanal eines Kommunikationssystems. Weiterhin werden über die Schnittstelle V in Rückwärtsrichtung DL (Downlink), insbesondere über einen Abwärtsverbindungskanal eines Kommunikationssystems, Daten bzw. Informationen von der empfangenden Station AP zu der sendenden bzw. ursprünglich sendenden Station MT zurückgesendet. Die Begriffe Daten, Informationen und Signalisierung sind in der Regel allgemein verwendbar. Sie stehen ohne beabsichtigte Beschränkung für einen Verkehr bzw. eine Kommunikation zwischen zwei Stationen.

Die eigentliche Datenquelle kann verschiedenartig ausgebildet sein, beispielsweise aus einem Mikrofon zur Aufnahme von Sprachdaten bestehen, kann insbesondere aber auch aus einer optischen Aufnahmeeinrichtung zur Aufnahme von Bildern oder Bildsequenzen bestehen. Insbesondere im Fall einer optischen Aufnahmeeinrichtung ist es auch möglich, die sendende Station MT mit einer Kamera CAM zum Aufnehmen von Bildern über eine entsprechende Schnittstelle zu koppeln, oder eine derartige Kamera CAM direkt mit einer entsprechenden derart sendenden Kommunikationsvorrichtung bzw. Station MT auszustatten.

Dies ermöglicht es, von der Kamera CAM aufgenommene Bilder bzw. deren Daten direkt oder nach einer Zwischenspeicherung zu einer entsprechend geeigneten Einrichtung im Kommunikationsnetz zu senden. Eine solche Einrichtung kann beispielsweise ein Monitor für Überwachungszwecke sein, kann aber auch ein großer Speicher sein, in dem eine Vielzahl derartiger Bilder oder Bilder mit extrem hoher Auflösung und entsprechend extrem hoher Datenrate abgespeichert werden können. Die Kamera CAM ist dadurch nicht auf die Aufnahme von Bildern bis zum Auffüllen ihres eigenen Speichers beschränkt. Besonders vorteilhaft ist eine Ausführungsform, bei der die Bilddaten, die von der Kamera CAM aufgenommen werden, über die sendende Station MT, die Funkschnittstelle V und eine empfangende Station AP übertragen werden, wobei die empfangende Station AP ihrerseits einen Zugang zu z.B. dem Internet ermöglicht, um die Daten in einem Format gemäß dem Internetprotokoll (IP) weiterzuleiten, wobei in einer besonders vorteilhaften Ausführungsform die letztendlich empfangende Einrichtung der persönliche Computer (PC) derjenigen Personen sein kann, welche die Kamera CAM bedient.

Bei dem nachfolgend beschriebenen Verfahren wird davon ausgegangen, dass die Verbindung, insbesondere Funkverbindung in Abwärtsrichtung bzw. Rückwärtsrichtung von der ursprünglich empfangenden Station AP zu der ursprünglich sendenden Station MT relativ gut ist. Eine relativ gute Verbindung kann dadurch erzielt werden, dass sich die sendende Station MT nahe bei der empfangenden Station AP befindet, dass die empfangende Station für Zurücksendungen eine sehr hohe Sendeleistung Ic* verwendet und/oder das für die Zurücksendung in Rückwärtsrichtung von der empfangenden Station AP zu der ursprünglich sendenden Station MT spezielle Kodierungs- oder Redundanzverfahren verwendet werden.

Der größte Anteil des Energieverbrauchs bei einer Übertragung von Daten findet typischerweise im Hochfrequenz-Teil, dass heißt im Leistungsverstärker der Sendeeinrichtung statt. Insbesondere im Fall von Ein-Chip-Lösungen kann die erforderliche Leistung für die Datenverarbeitung im Vergleich mit der erforderlichen Verstärkungsleistung üblicherweise vernachlässigt werden. Während die netzseitigen Stationen bei Kommunikationssystemen üblicherweise von einem Festnetzanschluss eine ausreichende Leistungszufuhr verfügen, so dass der Leistungsverbrauch nur ein unteres Kriterium darstellt, ist der Leistungsverbrauch bei mobilen Stationen mit einer mitgeführten Energiequelle nicht vernachlässigbar.

Bei dem hier betrachteten Ausführungsbeispiel soll daher die Sendeleistung von der mobilen, teilnehmerseitigen sendenden Station MT zu der empfangenden, insbesondere netzseitigen Station AP weit möglichst minimiert werden, während in umgekehrter Richtung für die Zurücksendung von Daten und Informationen eine Leistungsbeschränkung nicht erfolgen soll oder zur Sicherstellung einer fehlerfreien Übertragung sogar eine besonders hohe Energie für die Aussendung von Daten verwendet werden soll.

Insbesondere kann es vorteilhaft sein, wenn der rückwärtsgerichtete Kanal von der ursprünglich empfangenden Station AP zu der ursprünglich sendenden Station MT im Vergleich zu den bekannten Fehlerkorrekturverfahren, also beispielsweise im Vergleich zu einem niedrig datenratigen ARQ-Kanal, zu einem Kanal mit hoher oder sehr hoher Datenrate erweitert wird. Dies ermöglicht, in Rückwärtsrichtung von der ursprünglich empfangenden Station AP zu der ursprünglich sendenden Station MT die zuvor empfängerseitig bestimmten analogen Leistungswerte der empfangenen Daten bzw. Datensymbole zum ursprünglichen Sender zurück zu übertragen. Zwar wird durch diese Verfahrensweise die spektrale Gesamteffektivität des Kommunikationssystems deutlich herabgesetzt, da der hohe Anteil von Daten in dem rückwärts gerichteten Kanal DL die Übertragung nützlicher Daten blockiert, jedoch kann vorteilhafterweise mit der weiterhin beschriebenen Vorgehensweise der Leistungsverbrauch in der ursprünglich sendenden Station MT deutlich herabgesetzt werden, was von hohem Wert für bestimmte Anwendungen ist.

Gemäß dem bevorzugten Ausführungsbeispiel werden, wie dies in der Figur dargestellt ist, Daten c in einem ersten Schritt als Datenwert c1 mit einer bestimmten Sendeleistung, z.B. Ic1 = 1, ausgesendet. Während der Übertragung über die Schnittstelle V in Vorwärtsrichtung UL wirkt auf die übertragenen gesendeten Daten c1 ein Störsignal n(t) ein. Bei dem Störsignal n(t) kann es sich sowohl um statistisches, sogenanntes weisses Rauschen, aber auch um elektromagnetische Störeinflüsse anderer elektromagnetisch aussendender Leistungsquellen handeln.

Bei der empfangenden Station AP wird somit anstelle des gesendeten Datenwerts c1 mit einer Sendeleistung Ic1 = 1 ein Datenwert c1* mit einer empfangenen Empfangssignalleistung Ic1* empfangen, wobei diese Empfangsleistung Ic1* in der Regel durch den Einfluss des Störsignals n(t) ungleich 1 ist, d.h. Ic1* <> 1. In der empfangenden Station AP wird der entsprechende analoge Leistungswert Ic1* zu dem empfangenen Datenwert c1* bestimmt und über die Schnittstelle V in Rückwärtsrichtung DL zu der ursprünglich sendenden Station MT zurückgesendet. Dazu wird der analoge Leistungswert Ic1* zweckmäßigerweise in einen digitalen Wert umgewandelt, der dann als digitales Signal zurückgesendet wird.

In der ursprünglich sendenden Station MT wird der empfangene, zurückgesendete analoge Leistungswert Ic1* mit dem Sendeleistungswert Icl verglichen und die Leistungsdifferenz ΔIc1 bestimmt.

In einem zweiten Schritt zum Übertragen des ursprünglichen Datenwertes c1 wird eine Sendeleistungskorrektur unter Berücksichtigung der bestimmten Leistungsdifferenz ΔIc1 vorgenommen. Nachfolgend wird dazu bei dem bevorzugten Ausführungsbeispiel der ursprüngliche Datenwert c1 zuzüglich der bestimmten Differenzleistung ΔIc1 zu einem Korrekturdatenwert c2 zusammengesetzt, wobei die Leistungsdifferenz ΔIc1 im Fall einer empfängerseitig ursprünglich zu gering empfangenen Leistung Ic1* bei der Bildung des Datenkorrekturwertes c2 hinzugefügt wird, während sie im Fall einer empfängerseitig zu niedrig empfangenen Leistung Ic3* bei der Erzeugung des Datenkorrekturwertes c3 abgezogen wird. Ein derart erzeugter Datenkorrekturwert c2 wird nachfolgend von der sendenden Station MT zu der empfangenen Station AP in Vorwärtsrichtung UL über die Schnittstelle V gesendet. Seine Sendeleistung ist bestimmt durch die Sendeleistung beim vorherigen Aussenden zuzüglich/abzüglich der empfangenen Leistungsdifferenz, also Ic2 = Ic1 + ΔIc1.

Die empfangende Station behandelt den nunmehr empfangenen Datenkorrekturwert c2* so, wie zuvor den Datenwert c1*, dass heisst sie bestimmt wiederum einen analogen Leistungswert, und sendet diesen digitalisiert in Rückwärtsrichtung DL zu der sendenden Station MT zurück. In dieser wird wiederum die Leistungsdifferenz ΔIc2 zwischen dem empfangenen Leistungswert Ic2* und dem gesendeten Leistungswert Ic2 = (Ic1* + ΔIc1) bestimmt, um senderseitig einen weiteren Datenkorrekturwert c3 zu bilden.

Empfängerseitig werden die empfangenen Daten c1* und Datenkorrekturwerte c2*-c4* zur Erzeugung des ursprünglich gesendeten Datenwertes c1 gemeinsam verarbeitet. Besonders zweckmäßig ist dabei das Addieren der Daten c1* und der Datenkorrekturwerte c2*-c4* und das anschließende Dividieren durch die Anzahl der addierten Werte. Dieses, allgemein auch als Stapeln bezeichnete Verfahren ergibt einen Datenwert, der von Einflüssen durch Störsignale n(t) weitestgehend bereinigt ist. Je mehr Daten c1 und Datenkorrekturwerte c2-c4 von der sendenden Station MT zu der empfangenen Station AP übertragen werden, desto genauer kann der ursprünglich gesendete Datenwert c1 empfängerseitig rekonstruiert werden. Zweckmäßigerweise wird die Anzahl der insgesamt vorzunehmenden Sendungen von Daten und Datenkorrekturwerten jedoch auf eine vorgegebene Anzahl begrenzt, die 1 Symbol bildet, dass aus im dargestellten Ausführungsbeispiel 4 Daten und Datenkorrekturwerten bzw. sogenannten Chips 1-4 besteht. Insbesondere sollte berücksichtigt werden, dass mit zunehmender Anzahl von Übertragungen insgesamt ein erhöhter statt ein reduzierter Leistungsverbrauch zu verzeichnen ist.

Während bei dem dargestellten Ausführungsbeispiel eine Korrektur für den zuletzt gesandten Datenkorrekturwert c4 nicht vorgenommen werden kann, besteht für den Fall, dass die Störsignale n(t) nicht lediglich einem statistischen Rauschen entsprechen sondern beispielsweise einen linearen Trend oder additiven Zusatz enthalten, auch eine statistische Auswertung möglich, um für insbesondere den zuletzt zu übertragenden Datenkorrekturwert c4 eine voraussichtliche Verzerrung durch das Störsignal n(t) vorauszubestimmen und bei der Erzeugung des Datenkorrekturwertes c4 zu berücksichtigen. Derartige Vorauskorrekturen können natürlich auch auf die anderen Datenkorrekturwerte c2, c3 angewendet werden. Eine Anwendung von zuvor bestimmten nicht statistischen Korrekturwerten ist insbesondere auch auf später zu versendende Datenwerte anderer Daten bzw. anderer Symbole möglich.

Zu dem dargestellten Ausführungsbeispiel ist eine Vielzahl alternativer Ausführungsformen möglich, von denen nachfolgend nur einzelne beschrieben werden.

Anstelle jeweils einen Datenwert bzw. Daten c1 und direkt nachfolgend dazu gehörende Datenkorrekturwerte c2-c4 in Aufwärtsrichtung UL zu senden können auch beliebige Schemata eingeführt werden, bei denen zwischen dem Aussenden des dazugehörenden ersten Datenkorrekturwertes c2 bzw. weiterer Datenkorrekturwerte c3, c4 jeweils Daten und Datenkorrekturwerte anderer Ursprungsdaten gesendet werden. Dadurch kann die Zeit genutzt werden, die für das Übertragen, das empfängerseitige Bestimmen der analogen Leistung und das Rückübertragen sowie das senderseitige Bestimmen eines Datenkorrekturwertes erforderlich ist, indem andere Daten bzw. Datenkorrekturwerte zwischenzeitlich gesendet werden.

Während beim vorstehend beschriebenen Ausführungsbeispiel die bestimmte Leistungsdifferenz verwendet wurde, um einen Datenkorrekturwert durch Addition des ursprünglichen Datenwertes c1 und des Leistungsdifferenzwertes ΔIc1 zu bilden, ist es auch möglich, lediglich den Differenzbetrag ΔIc1 als Datenkorrekturwert zu der empfangenden Station AP zu übertragen. In dieser würde dann nicht eine Addition der empfangenen Werte und nachfolgend Division durch die Anzahl der addierten Werte vorgenommen werden, sondern es würde lediglich eine Addition sämtlicher zusammengehörender Daten und Datenkorrekturwerte gemeinsamen Datenursprungs vorgenommen werden, um den ursprünglichen Datenwert c1 hinsichtlich seiner ursprünglichen Leistung Ic1 zu rekonstruieren.

In vergleichbarer Art und Weise können auch Korrekturfaktoren und dergleichen bestimmt und angewendet werden.

Um bei der Übertragung der analogen Leistungswerte Ic1*-Ic3* die von Störsignalen n(t) möglichst ungestörte Übertragung sicherzustellen, gibt es verschiedene Möglichkeiten. Einerseits kann die Sendeleistung für die Rückwärtssendung DL so hoch gewählt werden, dass die Einwirkung von Störsignalen n(t) vernachlässigbar wird. Andererseits können aber auch verschiedene der für sich bekannten Korrekturverfahren verwendet werden, die wiederholte Sendungen mit redundanten Daten oder kodierten Daten verwenden.

Die Vorgehensweise beim Senden der Daten c1 und Datenkorrekturwerte c2-c4 von der sendenden Station MT zu der empfangenden Station AP ist ungefähr vergleichbar mit der Situation eines CDMA-Verfahrens (Code Division Multiple Access), bei dem nur ein einziger Wiederholungscode für alle Chips verwendet wird.

Möglich sind insbesondere auch Kombinationen des vorstehend beschriebenen Verfahrens mit zusätzlichen Datenübertragungs-Sicherungsverfahren bzw. Fehlerkorrekturverfahren, so dass die Übertragungssicherheit weiter erhöht wird. Sofern die vorstehend beschrieben Korrekturen bei gleichbleibender Sendeenergie bzw. Sendeleistung Ic nicht ausreicht, ist es auch möglich, die von der sendenden Station MT allgemein verwendete Sendeenergie Ic für Neuübertragungen zusätzlich zu erhöhen. Dies kann insbesondere automatisiert werden, indem bei der Bestimmung von Differenzleistungswerten ΔI für den Fall, dass erhöhte Leistungsdifferenzen ΔI festgestellt werden, automatisch die Basis-Sendeleistung erhöht wird. Umgekehrt kann die Basis-Sendeleistung Ic automatisch verringert werden, wenn bei der Bestimmung der Leistungsdifferenzen festgestellt wird, dass nur minimale oder vernachlässigbare Leistungsdifferenzen zwischen den gesendeten und den empfangenen Daten zu verzeichnen sind.

Ein Einsatz des vorstehend beschriebenen Verfahrens ist insbesondere bei bestehenden Funk-Kommunikationsssytemen zweckmäßig, bei denen oftmals die Verbindungen in Abwärtsrichtung von einer netzseitigen Station zu einer teilnehmerseitigen Station für die Übertragung größerer Datenmengen als in umgekehrter Richtung ausgelegt sind. Dies gilt insbesondere für den Bereich des Internets, bei dem von einzelnen teilnehmerseitigen Stationen MT über die entsprechenden Zugriffspunkte bzw. netzseitigen Stationen AP große Datenmengen von entfernten Datenquellen abgerufen werden. Bei derartigen Systemen ist es insbesondere auch nicht sehr nachteilhaft, dass die Umwandlung der empfängerseitig empfangenen Leistungswerte in analoge Daten und deren Übertragung als digitalisierte Daten eine in der Regel höhere Datenmenge für die Rückübertragung erforderlich macht, als an Daten in Vorwärtsrichtung zu übertragen ist.

In der Rückwärtsrichtung DL können insbesondere auch hochentwickelte und aufwendige Modulationsverfahren verwendet werden, um die bestimmten analogen Empfangs-Leistungswerte Ic1*-Ic3* zu den empfangenen Datenwerten c1*-C3* vernachlässigbar gestört zurück zu übertragen. In der ursprünglich sendenden Station MT können die auf diese Art und Weise sicher empfangenen Daten mit einem geringem zusätzlichen Leistungsaufwand verarbeitet werden, der im Vergleich zu der eingesparten Sendeleistung vernachlässigbar ist, da die Demodulierung der empfangenen zurückübertragenen Daten in der ursprünglich sendenden Station MT mit einer nur geringen Zusatzleistung für die Datenverarbeitung möglich ist.

Nachfolgend wird zu dem vorstehend beschriebenen Ausführungsbeispiel zur weiteren Verdeutlichung eine Beschreibung mit entsprechenden Zahlenwerten gegeben. Während der gesendete Datenwert c1 mit einem normierten Leistungswert von Ic1 = 1,0 übertragen wurde, wurde empfängerseitig durch den Einfluss des additiven Rauschens bzw. Störsignals n(t) ein Datenwert c1* mit einem Empfangsleistungswert Ic1* = 0,7 empfangen. Dieser Leistungswert 0,7 wird über den Rückwärtskanal DL zu der sendenden Station MT zurückgeführt. Diese sendet dann nach Bestimmung der Leistungsdifferenz ΔIc1 = 0,3 als Datenkorrekturwert c2 einen Datenkorrekturwert mit einer entsprechend erhöhten Sendeleistung Ic2 = 1,3 anstelle der üblichen Sendeleistung I = 1,0. Diese Vorgehensweise mit einer Vielzahl von entsprechend korrigierten Werten entspricht einem Wiederholungscode, das heisst die letztendliche Symbolerfassung bzw. Auswertung findet nur statt, wenn alle einzelnen Chips bzw. Daten und Korrekturwerte oder das vollständige Codewort empfangen wurden.

Dies reduziert zwar die mögliche Datenrate beim Senden von der Sendestation MT mit zunehmender Anzahl von Chips c1-c4, im Falle eines Systems wie HiperLAN2 mit sehr hohen Datenraten von z. B. 54Mbit/s ist es jedoch trotzdem möglich, Übertragungsraten von mehreren Mbit/s zu erzielen, was auch die Übertragung eines Bildes von einer digitalen Kamera zum Zugriffspunkt bzw. der empfangenden Station AP in wenigen Sekunden ermöglicht.

Zweckmäßigerweise kann die Anzahl der verwendeten Chips abhängig von der gewünschten Sendeleistung und der gewünschten Datenrate individuell angepasst und gewählt werden. Dazu würde dann in einem ersten Schritt eine entsprechende Signalisierung an die empfängerseitige Station vorgenommen, so dass diese ebenfalls Kenntnis von der Anzahl und Abfolge der empfangenen Daten zu jeweils einem gemeinsamen Datenursprung erhält. Durch eine Änderung der Anzahl von Datenchips pro Symbol kann somit die erforderliche Sendeleistung entsprechend reduziert bzw. erhöht werden. Dabei wird zweckmäßigerweise mit berücksichtigt, dass ab einer gewissen Anzahl von Übertragungen für diese Übertragungen wiederum jeweils eine gewisse Sendeenergie erforderlich ist, so dass eine Minimierungsfunktion zu verwenden ist, um die jeweils ideale Kombination von Anzahl der Datenchips und einzelnen Sendeleistungen im Verhältnis zur Gesamtsendeleistung zu bestimmen.

Zweckmäßigerweise werden auch die Modulationen, Datenraten und Sendeleistungen für die Rückwärtsübertragung von der Empfängerseite zur Senderseite optimiert, um eine Störung der Übertragungen in Vorwärtsrichtung UL oder anderer Stationen in der Umgebung durch beispielsweise zu hohe Sendeleistungen in Rückwärtsrichtung DL zu vermeiden.

Erste Simulationen haben gezeigt, dass für die Übertragungen in Vorwärtsrichtung UL tatsächlich Sendeleistungen unterhalb der Shannon-Kapazität möglich sind. Dies wird durch die übertragene Rückinformation in Rückwärtsrichtung möglich, wobei für die Rückwärtsrichtung zweckmäßigerweise ein Abwärtsverbindungs-Kanal als neuer Superkanal eingeführt werden kann, der eine höhere Shannon-Kapazität hat, als der Aufwärtsverbindungskanal für sich genommen alleine.

Die vorgeschlagene Verfahrensweise ist insbesondere bei OFDM-Systemen (OFDM: Orthogonal Frequency Division Multiplex) einsetzbar, da OFDM die Dauer eines jeden Symbols verlängert. Daher kann die Zeit für die Rundlaufverzögerung zur Erfassung des empfangenen Signals und dessen grundlegender Signalverarbeitung und Übertragung in dem Rückwärtskanal DL soweit erhöht werden, wie dies erforderlich ist. Jeder Unterträger (Subcarrier) des OFDM-Symbols würde parallel gehandhabt, das heißt, würde jeweils einen eigenen Kanal in Rückwärtsrichtung DL erhalten. Für höhere Rundlaufverzögerungen ist es auch möglich, eine Schleife nicht mit dem jeweils nächsten sondern einem späteren Symbol zu bilden, das heißt, Symbol 1 wird in Aufwärtsrichtung UL übertragen, wobei die Rückwärtsinformation wird in einem Symbol 4 in dem entsprechenden Rückwärtskanal DL übertragen wird. Nach Symbol 1 würde Symbol 2 in Aufwärtsrichtung UL übertragen und die zugeordnete Rückwärtsinformation in dem Symbol 5 in Rückwärtsrichtung usw.

Der rückwärtsgerichtete Kanal DL überträgt digital kodierte analoge Werte, das heißt, der Quantisierungspegel ist von Interesse. Ein Verfahren zum Reduzieren des erforderlichen Quantisierungspegels besteht darin, den Quantisierungsfehler für jeden übertragenen Chip bzw. Datenwert und Datenkorrekturwert zu speichern und diesen Fehlerwert für den nächsten Wert im Rückwärtskanal DL zu berücksichtigen, so dass der Gesamtfehler reduziert wird.

Unter Leistungswert bzw. Empfangs-Leistungswert sind dabei insbesondere die empfängerseitig tatsächlichen Amplituden des empfangenen Signals zu verstehen. Daher werden auch Fälle berücksichtigt, bei denen anstelle eines positiven Empfangsleistungswertes ein Empfangsleistungswert mit negativer Amplitude empfangen bzw. erfasst wird. Insbesondere können auch positive und negative Amplituden beim Aussenden eines Signals richtig erfasst und durch das Verfahren verarbeitet werden. Insbesondere werden in Rückwärtsrichtung die Amplitudenwerte mit dem entsprechenden Vorzeichen übertragen.

## Patentansprüche

1. Verfahren zum Regeln der Sendeparameter zur Aussendung von Daten (c1) durch eine sendende Station (MT) über eine Schnittstelle (V) zu einer die Daten (c1) empfangenden Station (AP), bei dem
- die Daten (c1) von der sendenden Station (MT) in Vorwärtsrichtung (UL) mit einer Sender-Sendeleistung (Ic1) gesendet werden, wobei während dessen Störeinflüsse (n(t)) auf die Daten (c1) einwirken,
- die empfangende Station (AP) nach dem Empfang der Daten (c1*) an die sendende Station (MT) in Rückwärtsrichtung (DL) über die Schnittstelle (V) eine Regelinformation für weitere Datenübertragungen an die ursprünglich sendende Station (MT) zurücksendet,
- **dadurch gekennzeichnet, dass**
- in der empfangenden Station (AP) Empfangs-Leistungs-Amplitudenwerte (Ic1*) der empfangenen Daten (c1*) bestimmt und in Rückwärtsrichtung (DL) zu der sendenden Station (MT) gesendet werden.

2. Verfahren nach Anspruch 1, bei dem
- die ursprünglich sendende Station (MT) aus den Leistungs-Amplitudenwerten (Ic1*) bestimmt, in welchem Maße die Sendeleistung (Ic1) der ursprünglich gesendeten Daten (c1) von der Empfangsleistung (Ic1*) der an der empfangenden Station (AP) empfangenen Daten (c1*) abweicht und
- nachfolgend Daten (c2) oder Datenkorrekturwerte (c2) mit entsprechender Sendeleistungskorrektur (ΔIc1) sendet.

3. Verfahren nach Anspruch 1 oder 2, bei dem
das Senden der Daten (c1) in Vorwärtsrichtung (UL) mit einer Sendeleistung (Ic1) unterhalb der Shannon-Kapazität durchgeführt wird, insbesondere das Zurücksenden der zugeordneten analogen Leistungs-Amplitudenwerte (Ic1*) oberhalb der Shannon-Kapazität durchgeführt wird.

4. Verfahren nach einem vorstehenden Anspruch, bei dem
das Zurücksenden der Leistungs-Amplitudenwerte (Ic1*) derart durchgeführt wird, dass weitere Störeinflüsse (n(t)) bei der Übertragung für die Bestimmung der Leistungsdifferenz (±ΔIc1) in der ursprünglich sendenden Station (MT) vernachlässigbar sind.

5. Verfahren nach Anspruch 3 oder 4, bei dem
das Zurücksenden der Leistungs-Amplitudenwerte (Ic1*) von der ursprünglich empfangenden Station (AP) mit einer wesentlich höheren Sendeleistung (Ic1*) durchgeführt wird, als der Sendeleistung (Ic1) der ursprünglich sendenden Station (MT).

6. Verfahren nach Anspruch 3, 4 oder 5, bei dem das Zurücksenden der Leistungs-Amplitudenwerte (Ic1*) mit einem Kodierungs- und/oder Redundanzverfahren durchgeführt wird.

7. Verfahren nach einem vorstehenden Anspruch, bei dem
die sendende Station (MT) nach dem Bestimmen der Empfangsleistungs-Amplitudenwerte (Ic1*) zuvor ausgesandter Daten (c1) für den Fall einer nicht tolerierbaren Störung (n(t)) auf der Schnittstelle (V) in Vorwärtsrichtung (UL) Korrekturdaten (c2) zu diesen zuvor gesendeten Daten (c1) zu der empfangenden Station (AP) sendet.

8. Verfahren nach Anspruch 7, bei dem
die Korrekturdaten (c2) einem Korrekturfaktor oder additiven Korrekturwert entsprechen.

9. Verfahren nach Anspruch 7, bei dem
die Korrekturdaten (c2) aus neu übersendeten ursprünglichen Daten (c1) bestehen.

10. Verfahren nach Anspruch 9, bei dem
die Korrekturdaten (c2) aus den ursprünglich gesendeten Daten (c1) mit einer additiven oder subtraktiven Leistungsdifferenz (Ic2 = Ic1 ± ΔIc1) erzeugt und empfängerseitig (AP) die Korrekturdaten (c2) mit den ursprünglichen Daten (c1) verarbeitet werden, insbesondere damit addiert und durch die Zahl der addierten Werte geteilt werden.

11. Verfahren nach Anspruch 9 oder 10, bei dem
nach dem Senden von Daten (c1) diese bei Bedarf korrigierten Daten (c2, c3, c4) eine vorgegebene Anzahl von Malen wiederholt übertragen und empfängerseitig gemeinsam verarbeitet werden.

12. Verfahren nach einem vorstehenden Anspruch, bei dem hinsichtlich Abweichung zwischen gesendeten Leistungs-Amplitudenwerten (Ic1) und empfangenen Leistungs-Amplitudenwerten (Ic1*) eine statistische Auswertung durchgeführt und für zukünftige Sendungen von Daten (c4) und/oder Datenkorrekturwerten berücksichtigt wird.

13. Kommunikationssystem-Vorrichtung (AP) zum Durchführen eines Verfahrens nach einem der vorstehenden Ansprüche mit einer Sende-/Empfangseinrichtung zum Übertragen von Daten (c1*, Ic1*) über eine Schnittstelle (V, DL) zu einer kommunizierenden Station (MT),
- einer Verarbeitungseinrichtung (P) zum Verarbeiten der Daten (c1*) und Steuern der Kommunikationssystem-Vorrichtung, **gekennzeichnet durch**
- eine Leistungsbestimmungseinrichtung zum Bestimmen der Empfangs-Leistungs-Amplitudenwerte (Ic1*) von Daten (c1*), die von der kommunizierenden sendenden Station (MT) empfangen wurden, und
- eine Weiterleitungseinrichtung zum Zurücksenden der bestimmten Leistungs-Amplitudenwerte (Ic1*) zu der ursprünglich sendenden Station (MT), wobei das Zurücksenden derart erfolgt, dass Störungen (n(t)) auf der Schnittstelle (V, DL) einen vernachlässigbaren oder korrigierbaren Einfluss auf die Leistungs-Amplitudenwerte haben.

14. Kommunikationssystem-Vorrichtung (MT) zum Durchführen eines Verfahrens nach einem vorstehenden Anspruch in Verbindung mit einer Vorrichtung nach Anspruch 13, mit
- einer Sende-/Empfangseinrichtung zum Übertragen von Daten (c1, ΔIc1*),
- einer Verarbeitungseinrichtung (P) zum Verarbeiten von zu versendenden und empfangenen Daten und Steuern der Kommunikationssystem-Vorrichtung (MT),
- einem Speicher (M) mit einem Speicherraum zum zwischenzeitlichen Speichern der zu versendenden und versandten Daten (c1),
- **dadurch gekennzeichnet, dass**
- die Verarbeitungseinrichtung (P) zum Vergleichen zurückgesendeter Leistungs-Amplitudenwerte (Ic1*) mit den Leistungs-Amplitudenwerten (Ic1) der entsprechenden ursprünglich gesendeten Daten (c1) und zum Durchführen einer Leistungskorrektur für nachfolgende Sendungen von Daten (c2) ausgelegt ist.

15. Kamera (CAM) zum Aufnehmen von Bildern und/oder Bildfolgen mit einer Kommunikationssystem-Vorrichtung (MT) nach Anspruch 14 oder einer Schnittstelle zu einer solchen Kommunikationssystem-Vorrichtung (MT) zum elektronischen Ausgeben aufgenommener Bilder an eine entfernte Kommunikationssystem-Einrichtung über eine Schnittstelle (V).
